# EUROPÄISCHE PATENTANMELDUNG

(11) **EP 4 311 976 A1**
(43) Veröffentlichungstag der Anmeldung: **31.01.2024**
(21) Anmeldenummer: 22187461.3
(22) Anmeldetag: 28.07.2022
(51) Int. Cl.: F21S 2/00, F21V 21/002, F21V 21/35, F21S 8/06, F21V 23/02, F21V 23/04, F21V 17/16, A01G 9/24, F21Y 103/00, F21Y 103/10

(54) **INTELLIGENTES MODULARES BELEUCHTUNGSSYSTEM UND VERFAHREN ZUM ERSTELLEN DES BELEUCHTUNGSSYSTEMS**

(71) Anmelder: cropled AG, 6055 Alpnach Dorf (CH)
(72) Erfinder: OBERHOLZER, Remo Werner, 6048 Horw (CH); BEER, Samuel, 8640 Rapperswil SG (CH); BLICKENSTORFER, Michael, 8404 Winterthur (CH)
(74) Vertreter: Koelliker, Robert

(57) **Zusammenfassung**

Die vorliegende Erfindung bezieht sich auf ein intelligentes modulares Beleuchtungssystem (1) umfassend ein Fixierelement (2) mit Stromleitern (21), einen Beleuchtungskörper (3) umfassend eine Elektroplatine (31), Stromabnehmer (32) und mindestens ein Beleuchtungselement (33), ein Befestigungselement (5) mit welchem der Beleuchtungskörper (3) mit dem Fixierelement (2) reversibel verbunden ist, einen Computer (6) mit einem Programm zur Erfassung sowie gegebenenfalls Anpassung und Steuern des Beleuchtungskörper mittels Daten, und ein Netzteil (7), wobei
i) das Befestigungselement (5) ein Klick-/Rastelement (51) darstellt und am Beleuchtungskörper (3) im Bereich der Stromabnehmer (32) angeordnet ist; und/oder
ii) der Beleuchtungskörper (3) eine Kommunikations- und Messeinheit umfassend eine Einheit zur drahtlosen Kommunikation (34) sowie gegebenenfalls eine Einheit zur drahtgebundenen Kommunikation (35) und/oder eine Positionserkennung (36) umfasst.
Beansprucht wird auch Verfahren zum Erstellen des intelligenten modularen Beleuchtungssystem (1), sowie die Verwendung des Beleuchtungssystems (1).

## Beschreibung

Die vorliegende Erfindung bezieht sich auf ein intelligentes modulares Beleuchtungssystem zur Beleuchtung von Innen- und Aussenräumen, ein Verfahren zum Erstellen des intelligenten modularen Beleuchtungssystems, sowie dessen Verwendung.

Die Beleuchtung von Innen- und Aussenräumen ist für unsere Gesellschaft äusserst zentral. Sie ermöglicht auch in der Nacht nicht nur Freizeitaktivitäten, sondern auch das Arbeiten. Somit ist der Mensch nicht mehr strikt an den Tag-Nacht-Rhythmus gebunden. Auch ermöglicht die Beleuchtung Gebäude mit grösseren Räumen, welche nicht alle zwingend Fenster mit Tageslicht benötigen. Beispielhaft seien grosse Bürogebäude, Lagerhallen und Fabriken genannt. In der neueren Zeit wurde auch herausgefunden, dass gezielte Beleuchtung von Pflanzen deren Wachstum und Ertrag optimiert und dass beispielsweise Kühe mehr Milch geben können.

Für grosse zu beleuchtende Räume und Flächen werden oft gezielt Beleuchtungssysteme eingesetzt, welche eine Vielzahl an Beleuchtungskörper, d.h. Lampen, aufweisen. Diese Beleuchtungssysteme werden in der Regel fest montiert, was mit einem gewissen Aufwand verbunden ist. Werden diese Beleuchtungssysteme nicht mehr benötigt, müssen sie aufwändig demontiert werden. Dies fällt insbesondere bei temporären Bauten wie Messe- und Konzerthallen ins Gewicht.

Somit ist es die Aufgabe der vorliegenden Erfindung, ein Beleuchtungssystem bereitzustellen, welches schnell und ohne grossen Aufwand sowohl zusammen- wie auch abgebaut werden kann. Zudem soll es möglich sein, das Beleuchtungssystem auch autonom und zentral zu steuern, sowie grosse Datenmenge ohne Überlastung einzelner Bauteile vom und zum Computer (6) zu senden. Des Weiteren soll das Beleuchtungssystem eine grosse räumliche drahtlose Abdeckung aufweisen, ohne dass bauliche Massnahmen ergriffen werden müssen.

Diese herausfordernde Aufgabe wurde überraschenderweise gelöst mit einem intelligenten modularen Beleuchtungssystem (1) umfassend
- ein Fixierelement (2) mit mindestens zwei Stromleitern (21),
- einen Beleuchtungskörper (3) umfassend eine Elektroplatine (31), mindestens zwei Stromabnehmer (32) und mindestens ein Beleuchtungselement (33),
- ein Befestigungselement (5) mit welchem der Beleuchtungskörper (3) mit dem Fixierelement (2) reversibel verbunden ist,
- einen Computer (6) mit einem Programm zur Erfassung sowie gegebenenfalls Anpassung und Steuern des Beleuchtungskörper mittels Daten, und
- ein Netzteil (7),
dadurch gekennzeichnet, dass
i) das Befestigungselement (5) ein Klick-/Rastelement (51) darstellt und am Beleuchtungskörper (3) im Bereich der Stromabnehmer (32) angeordnet ist, wodurch das Klick-/ Rastelement (51) den Beleuchtungskörper (3) reversibel mit dem Fixierelement (2) so verbindet, dass die Stromabnehmer (32) mit den Stromleitern (21) in Kontakt sind; und/oder
ii) der Beleuchtungskörper (3) eine Kommunikations- und Messeinheit umfassend eine Einheit zur drahtlosen Kommunikation (34) sowie gegebenenfalls eine Einheit zur drahtgebundenen Kommunikation (35) und/oder eine Positionserkennung (36) umfasst.

Beansprucht wird auch ein Verfahren zum Erstellen des erfindungsgemässen intelligenten modularen Beleuchtungssystems (1), wobei
i) das Befestigungselement (5) mit dem Beleuchtungskörper (3) verbunden wird und der Beleuchtungskörper (3) mittels Befestigungselement (5) am Fixierelement (2) reversibel so angeordnet wird, dass die Stromabnehmer (32) des Beleuchtungskörpers (3) mit den Stromleitern (21) des Fixierelements (2) in Kontakt kommen, wobei das Befestigungssystem (5) ein Klick-/Rastsystem (51) darstellt; und/oder
ii) die Kommunikations- und Messeinheit des Beleuchtungskörpers (3), wenn am Fixierelement (2) angeordnet, mit dem Computer (6) mittels Kommunikations- und Messeinheit kommuniziert und die Position des Beleuchtungskörpers (3), relativ zu weiteren optional vorhandenen Beleuchtungs- und/oder Sensorkörpern (3', 4), am Fixierelement (2) erkennt und an den Computer (6) weiterleitet.

Zudem wird auch die Verwendung des erfindungsgemässen Beleuchtungssystems (1) zur Beleuchtung von Innen- und Aussenräumen beansprucht, wobei die Räume bevorzugt Gewächshäuser, insbesondere Vertical Farms, Tierstallungen, öffentliche Gebäude, Messe- und/oder Konzerthallen, Zoos, Aquarien, Wohnzimmer, Gärten, Versuchslabore, Plantagen, Büro- und/oder Werkräume sind.

Das erfindungsgemässe intelligente modulare Beleuchtungssystem (1), das erfindungsgemässe Verfahren zum Erstellen des erfindungsgemässen Beleuchtungssystems (1), sowie die Verwendung des erfindungsgemässen Beleuchtungssystems (1) weist überraschenderweise eine Vielzahl an Vorteilen auf.

Wenn das Befestigungselement (5) ein Klick-/Rastelement (51) darstellt, können die Beleuchtungskörper (3, 3', 3*) und die Sensorkörper (4, 4*) äusserst einfach und an beliebigem Ort am Fixierelement (2, 2*) reversibel befestigt werden, ohne dass ein Werkzeug, beispielsweise ein Schraubenschlüssel, benötigt wird. Zudem lassen sich die Beleuchtungs- und Sensorkörper (3, 3', 3*, 4, 4*) typischerweise in der Längsrichtung des Fixierelements (2, 2*) ohne grossen Kraftaufwand mit der Hand auf einfache Art und Weise verschieben. Dies erlaubt nach der Befestigung der Beleuchtungs- und Sensorkörper (3, 3', 3*, 4, 4*) am Fixierelement (2, 2*) eine einfache Feinpositionierung der Beleuchtungs- und Sensorkörper (3, 3', 3*, 4, 4*). Falls ein Beleuchtungs- und Sensorkörper (3, 3', 3*, 4, 4*) entfernt und beispielsweise ausgetauscht werden muss, kann auch dies einfach und schnell von Hand durchgeführt werden, ohne dass ein Werkzeug benötigt wird. So kann das Beleuchtungssystem (1) schnell modular aufgebaut und erweitert sowie gegebenenfalls geändert werden. Dabei kann eine Vielzahl unterschiedlicher Beleuchtungs- und Sensormodule (3, 3', 3*, 4, 4*) an verschiedenen Fixierelementen (2, 2*) schnell und einfach angeordnet werden.

Wenn die Beleuchtungs- und Sensorkörper (3, 3', 3*, 4, 4*) eine Kommunikations- und Messeinheit umfassen, nimmt der zuerst angebrachte Beleuchtungs- oder Sensorkörper (3, 4) drahtlos Kontakt mit dem Computer (6) auf, um gegenseitig Identifikations-, Steuerungs- und/oder Messdaten auszutauschen. Die Kommunikation jedes weiteren Beleuchtungs- und/oder Sensorkörpers (3, 3', 3*, 4, 4*) erfolgt anschliessend über die Kommunikations- und Messeinheit des zuerst angebrachte Beleuchtungs- oder Sensorkörper (3, 4). Weist jedoch die Kommunikations- und Messeinheit eines weiteren Beleuchtungs- und/oder Sensorkörpers (3, 3', 3*, 4, 4*) eine bessere drahtlose Konnektivität mit dem Computer (6) auf, kann automatisch dieser Beleuchtungs- und/oder Sensorkörpers (3, 3', 3*, 4, 4*) als Relais für die anderen Beleuchtungs- und/oder Sensorkörpers (3, 3', 3*, 4, 4*) dienen. Dies führt nicht nur zu wesentlich weniger Datenverkehr - insbesondere bei einer Vielzahl an Beleuchtungs- und/oder Sensorkörpern (3, 3', 3*, 4, 4*)-zwischen den Beleuchtungs- und/oder Sensorkörpern (3, 3', 3*, 4, 4*) des Beleuchtungssystems (1) und dem Computer (6), sondern optimiert die drahtlose Verbindung, was für den erfolgreichen Betrieb des Beleuchtungssystems (1) äusserst hilfreich ist. So kann eine grosse Datenmenge auch ohne Überlastung einzelner Bauteile vom und zum Computer (6) gesendet werden. Auch wird die räumliche Abdeckung des Drahtlos-Netzwerks deutlich vergrössert, ohne dass bauliche Massnahmen ergriffen werden müssen.

Umfassen die Kommunikations- und Messeinheiten der Beleuchtungs- und Sensorkörper (3, 3', 3*, 4, 4*) die Einheit zur drahtgebundenen Kommunikation (35) und/oder eine Positionserkennung (36), erkennen die einzelnen Beleuchtungs- und Sensorkörper (3, 3', 3*, 4, 4*) automatisch ihre Position am Fixierelement (2, 2*), relativ zu den anderen vorhandenen Beleuchtungs- und/oder Sensorkörpern (3, 3', 3*, 4, 4*), und leiten die Position an den Computer (6) weiter. Dies erlaubt eine exakte Abbildung der Reihenfolge der einzelnen Beleuchtungs- und/oder Sensorkörper (3, 3', 3*, 4, 4*) am jeweiligen Fixierelement (2, 2*) auf dem Computer (6). Dadurch können einzelne Beleuchtungs- und/oder Sensorkörper (3, 3', 3*, 4, 4*) - beispielsweise anhand eines Programms und/oder manuell - gezielt ausgewählt und/oder gesteuert werden. Dies kann dann von grossem Vorteil sein, wenn einzelne Beleuchtungselemente (3, 3', 3*) eines Fixierelements (2, 2*) unterschiedlich angesteuert werden sollen, beispielsweise wenn in einer Versuchsanordnung unterschiedliche Pflanzen ein anderes Beleuchtungsprogramm benötigen. Zudem kann auf dem Computer schnell angezeigt werden, wenn ein Beleuchtungs- und/oder Sensorkörper (3, 3', 3*, 4, 4*) fehlerhaft ist und ausgetauscht werden muss. Auch erlaubt dies eine Automatisierung der Beleuchtung, beispielsweise für Versuche oder wenn Pflanzen in einem anderen Wachstumsstadium sind.

Diese Verbundtechnik bringt den grossen Vorteil mit sich, dass beispielsweise die Grösse einer Anbaufläche für Pflanzen für das Beleuchtungssystem (1) keine Rolle mehr spielt und der Betreiber hat einen vergleichbar geringen Aufwand beim initialen Setup der Beleuchtungskörper (3, 3', 3*) und braucht anschliessend nur noch ein paar wenige Klicks, um beispielsweise 100 Lampen gleichzeitig anzusteuern.

Und da die einzelnen Beleuchtungs- und/oder Sensorkörper (3, 3', 3*, 4, 4*) miteinander kommunizieren und eine Positions- und Abstandserkennung durchführen, können sie sich auch automatisch gruppieren. Dadurch können auch einzelne Gruppen separat über den Computer (6) angesteuert werden.

### Das Beleuchtungssystem (1)

Das erfindungsgemässe intelligente und modulare Beleuchtungssystem (1), kurz auch nur Beleuchtungssystem (1) genannt, ist besonders geeignet zur Beleuchtung von Innen- und Aussenräumen.

Das Beleuchtungssystem (1) umfasst
- mindestens ein Fixierelement (2) mit mindestens je zwei Stromleitern (21),
- mindestens einen Beleuchtungskörper (3) umfassend je eine Elektroplatine (31), mindestens zwei Stromabnehmer (32) und mindestens ein Beleuchtungselement (33),
- mindestens ein Befestigungselement (5) pro Beleuchtungskörper (3), mit welchem der Beleuchtungskörper (3) mit dem Fixierelement (2) reversibel verbunden ist,
- mindestens einen Computer (6) mit einem Programm zur Erfassung und gegebenenfalls Anpassen und Steuern von Daten, sowie
- ein Netzteil (7), welches die Stromleiter (21) des Fixierelements (2) mit dem Stromnetz verbindet. Dabei wird auch das mindestens eine Beleuchtungselement (33) des Beleuchtungskörpers (3) über die Stromabnehmer (32) mit Strom versorgt.

In einer ganz besonders bevorzugten Ausführungsform i) des Beleuchtungssystems (1) stellt das Befestigungselement (5) ein Klick-/Rastelement (51) dar und ist am Beleuchtungskörper (3) im Bereich der Stromabnehmer (32) angeordnet. Dadurch verbindet das Klick-/ Rastelement (51) den Beleuchtungskörper (3) reversibel, und bevorzugt auch verschiebbar. Dabei verbindet das Klick-/Rastelement (51) den Beleuchtungskörper (3) mit dem Fixierelement (2) so, dass die Stromabnehmer (32) des Beleuchtungskörpers (3) mit den Stromleitern (21) des Fixierelements (2) in Kontakt sind. Dadurch kann der Beleuchtungskörper (3) an beliebiger Stelle mit dem Fixierelement (2) verbunden werden und das mindestens eine Beleuchtungselement (33) über den Stromleiter (21), Stromabnehmer (32) und die Elektroplatine (31) mit Strom versorgt werden.

In einer anderen ganz besonders bevorzugten Ausführungsform ii) des Beleuchtungssystems (1) umfasst der Beleuchtungskörper (3) eine Kommunikations- und Messeinheit, welche eine Einheit zur drahtlosen Kommunikation (34) sowie gegebenenfalls eine Einheit zur drahtgebundenen Kommunikation (35) und/oder eine Positionserkennung (36) umfasst. Dabei ist es oft äusserst vorteilhaft, wenn die Kommunikations- und Messeinheit neben der Einheit zur drahtlosen Kommunikation (34) sowohl die Einheit zur drahtgebundenen Kommunikation (35) wie auch die Positionserkennung (36) umfasst.

In einer bevorzugten Ausführungsform des Beleuchtungssystems (1)
- umfasst dieses mindestens einen weiteren Beleuchtungskörper (3') und/oder mindestens einen Sensorkörper (4) mit Elektroplatine (41), mindestens zwei Stromabnehmern (42), mindestens einem Sensor (43) sowie eine Kommunikations- und Messeinheit, wobei der Beleuchtungskörper (3') und der Sensorkörper (4) mittels Befestigungselement (5) mit dem Fixierelement (2) reversibel verbunden sind, und/oder
- weist das Beleuchtungssystem (1) mindestens ein weiteres Fixierelement (2*) mit mindestens einem Beleuchtungskörper (3*), insbesondere eine Vielzahl an Beleuchtungskörpern (3*) und bevorzugt mindestens einem Sensorkörper (4*), auf.

Dabei sind die Beleuchtungskörper (3', 3*) und Sensorkörper (4, 4*) auch mit dem Befestigungselement (5) am Fixierelement (2, 2*) befestigt, wobei das Befestigungselement (5) bevorzugt ein Klick-/Rastelement (51) darstellt.

Das Fixierelement (2, 2*) ist typischerweise über das Netzteil (7) mit dem Stromnetz verbunden. Umfasst das Beleuchtungssystem (1) eine Vielzahl an Fixierelementen (2, 2*), kann jedes einzelne Fixierelement (2, 2*) mit einem separaten Netzteil (7) verbunden sein, oder ein Netzteil (7) kann eine Vielzahl, d.h. zwei oder mehr, an Fixierelementen (2, 2*) mit Strom versorgen. Die Länge der Fixierelemente (2) beträgt typischerweise zwischen 30 cm und 20 m, bevorzugt zwischen 1 m und 10 m, wobei auch andere Dimensionen möglich sind.

Jedes Fixierelement (2, 2*) umfasst mindestens zwei Stromleiter (21), welche in Längsrichtung der Fixierelemente (2, 2*) und bevorzugt seitlich oder unterhalb der Fixierelemente (2, 2*) angeordnet sind. Die Stromleiter (21) weisen typischerweise einen Plus- und einen Minuspol auf und sind mit dem Netzteil (7) verbunden. Die Stromleiter (21) basieren zudem typischerweise auf Kupfer, Gold, Aluminium, Silber oder Legierungen basierend auf Kupfer, Aluminium, Gold oder Silber, beispielsweise Bronze oder Messing.

Die Fixierelemente (2, 2*) und die Beleuchtungskörper (3, 3', 3*) und die Sensorkörper (4, 4*), gemeinsam Beleuchtungs- und Sensorkörper (3, 3', 3*, 4, 4*) genannt, basieren bevorzugt auf Metall wie Aluminium oder Stahl, und/oder Kunststoff, insbesondere Thermoplasten oder Duroplasten, wie beispielsweise PVC, PET, ABS, PC, PUR, Nylon, PE, PP, TPU und/oder Gemische basierend auf mindestens einem dieser Polymere.

Die Beleuchtungs- und Sensorkörper (3, 3', 3*, 4, 4*) können problemlos in gewünschter Reihenfolge - typischerweise rechtwinklig - am Fixierelement (2, 2*) angeordnet werden. Dabei können die Beleuchtungselemente (33) der Beleuchtungskörper (3, 3' 3*) identisch oder unterschiedlich sein, d.h. sie können beispielsweise unterschiedliche Lichtspektren aufweisen. Auch können die Sensorkörper (4, 4*) die gleichen oder unterschiedliche Sensoren (43) enthalten. Neben den Sensorkörpern (4, 4*) können auch die Beleuchtungskörper (3, 3', 3*) Sensoren (43) enthalten.

Die Beleuchtungs- und Sensorkörper (3, 3', 3*, 4, 4*) können auf der gleichen oder einer unterschiedlichen Bauweise basieren, wobei alle eine Elektroplatine (31, 41), mindestens zwei Stromabnehmer (32, 42), sowie eine Kommunikations- und Messeinheit aufweisen. Die Länge der Beleuchtungs- und Sensorkörper (3, 3', 3*, 4, 4*) beträgt beispielsweise zwischen 10 cm und 5 m, bevorzugt zwischen 20 cm und 2 m aufweisen, wobei auch andere Dimensionen möglich sind.

Die Elektroplatine (31) der Beleuchtungskörper (3, 3', 3*) und die Elektroplatine (41) der Sensorkörper (4, 4*) können auf der gleichen oder einer unterschiedlichen Bauweise basieren. Bevorzugt basieren die Elektroplatine (31) des Beleuchtungskörpers (3) und die Elektroplatine (41) des Sensorkörpers (4) auf einem Printed Circuit Board (PCB) und umfassen bevorzugt die Einheit zur drahtlosen Kommunikation (34) mit Antenne, die Einheit zur drahtgebundenen Kommunikation (35), einen Mikrokontroller, insbesondere einen System-on-Chip Mikrokontroller, d.h. einen Mikrokontroller SOC, eine Ansteuereinheit für die Beleuchtungselemente (33), und/oder Sensoren zur Überwachung der Funktion des Boards. Alternativ oder zusätzlich ist die Elektroplatine (31, 41) mit den Stromabnehmern (32, 42), der Positionserkennung (36), den Beleuchtungselementen (33) und/oder den Sensoren (43) verbunden. Die Ansteuereinheit für die Beleuchtungselemente (33), auch Beleuchtungsplatine für die Beleuchtungselemente (33) genannt, wie auch gegebenenfalls eine Sensorplatine für die Sensoren (43), können auch als separate Bauteile mit der Elektroplatine (31, 41) verbunden sein.

Die mindestens zwei Stromabnehmer (32, 42) der Beleuchtungs- und Sensorkörper (3, 3', 3*, 4, 4*) sind mit der Elektroplatine (31, 41) verbunden. Wenn die Beleuchtungs- und Sensorkörper (3, 3', 3*, 4, 4*) mittels Befestigungselement (5, 51) am Fixierelement (2, 2*) angeordnet sind, sind die Stromabnehmer (32, 42) mit den Stromleitern (21) des Fixierelements (2, 2*) in Kontakt, sodass die Elektroplatine (31, 41), und somit die Beleuchtungs- und Sensorkörper (3, 3', 3*, 4, 4*), mit Strom versorgt sind.

Geeignete Stromabnehmer (32, 42) sind dem Fachmann bekannt und er kann die geeignete Auswahl treffen. Sie können einteilig sein und so direkt den Strom von den Stromleitern (21) zur Elektroplatine (31, 41) führen. Alternativ kann das Befestigungselement (5) - oder ein Teil davon - als Stromabnehmer (31, 41) dienen und den Strom von den Stromleitern (21) bis zur Elektroplatine (31, 41) - oder dafür vorgesehenen Kontaktpunkte, welche mit der Elektroplatine (31, 41) in Verbindung stehen - führen. Die Stromabnehmer (32, 42) basieren vorteilhafterweise auf Kupfer, Gold, Aluminium, Silber oder Legierungen basierend auf Kupfer, Aluminium, Gold oder Silber, beispielsweise Bronze oder Messing.

In einer bevorzugten Ausführungsform
- sind die mindestens zwei Stromabnehmer (32, 42) durch das Klick-/Rastelement (51) seitlich geschützt, wenn das Klick-/Rastelement (51) am Beleuchtungs- und/oder Sensorkörper (3, 3', 3*, 4, 4*) angeordnet ist und wenn der Beleuchtungs- und/oder Sensorkörper (3, 3', 3*, 4, 4*) nicht am Fixierelement (2) befestigt ist.
- Alternativ oder zusätzlich liegen die Stromabnehmer (32, 42) der Beleuchtungs- und/oder Sensorkörper (3, 3', 3*, 4, 4*) in Form von elektrischen oder magnetischen Kontakten, oder in Form von Federkontakten vor. Letztere sind oft bevorzugt und können beispielsweise in Form von Federkontaktstiften, Spring Loaded Connectors (SLC), Pogo Pin, Schleifkontakten, Vogelpins oder Federn vorliegen. Dabei werden diese Stromabnehmer (32, 42) typischerweise mittels Federkraft an die Stromleiter (21) gedrückt, wenn der Beleuchtungs- und/oder Sensorkörper (3, 3', 3*, 4, 4*) am Fixierelement (2) befestigt ist.

Der Beleuchtungskörper (3) umfasst mindestens ein, bevorzugt eine Vielzahl, d.h. mindestens 2, bevorzugt mindestens 5, Beleuchtungselemente (33). Werden mehrere Beleuchtungselemente (33) je Beleuchtungskörper (3) eingesetzt, können die Beleuchtungselemente (33) gleich oder verschieden sein. Werden weitere Beleuchtungskörper (3') eingesetzt, können alle Beleuchtungskörper (3, 3') identische oder unterschiedliche Beleuchtungselemente (33) aufweisen. Werden sehr viele Beleuchtungselemente (33) eingesetzt, ist es oft vorteilhaft, wenn diese an einer Beleuchtungsplatine angeordnet sind, welche mit der Elektroplatine (31) verbunden ist. So können beispielsweise auch 100 oder mehr Beleuchtungselemente (33) je Beleuchtungskörper (3) eingesetzt werden. Auch wird dadurch die Montage der Beleuchtungskörper (33) am Beleuchtungskörper (3) stark vereinfacht. Werden mehrere Sensoren (43) eingesetzt, werden diese bevorzugt an einer Sensorplatine angeordnet. Dies vereinfacht die Herstellung der Sensorkörper (4).

In einer bevorzugten Ausführungsform
- stellt das mindestens eine Beleuchtungselement (33) eine Leuchtdiode, Halogenlampe, Quecksilberdampflampe, Natriumdampflampe, Leuchtstoffröhre, Energiesparlampe, Glühbirne, Neonröhre, Gasentladungslampe oder Laser Crystal Ceramics (LCC) dar und emittiert Licht mit einem Wellenspektrum von 260 nm (UVC-Strahlen) bis 980 nm (Fernes Infrarot, FIR), oder einen Teil davon; und/oder
- umfassen die Sensoren (43) eine Kamera, insbesondere eine Kamera für sichtbares, ultraviolettes und/oder infrarotes Licht, eine Thermalkamera und/oder eine visuelle Kamera; Sensoren zur Bestimmung der Umgebungstemperatur, Blattoberflächentemperatur, Luftfeuchtigkeit, des CO₂-Gehalts, Lichteinfalls, Abstand zum beleuchtenden Objekt und/oder zur Decke, Sensoren zur Erkennung von Schädlingsbefall, Nährstoffmängel, Pflanzentyp und Wuchsqualität, wobei die Sensoren (43) am Sensorkörper (4) und/oder am Beleuchtungskörper (3) angeordnet sind,
wobei das Beleuchtungselement (33) und die Sensoren (43) direkt oder indirekt über eine Beleuchtungsplatine resp. Sensorplatine mit der Elektroplatine (31, 41) verbunden sind.

Mit den Abstandssensoren (43) wird der Abstand des Sensorkörpers (4) typischerweise nach unten, beispielsweise zu einer wachsenden Pflanze, und/oder nach oben zur Aufhängung des Beleuchtungssystems (1) gemessen. Aufgrund des gemessenen Abstands kann bei Bedarf die Höhe des Fixierelements (2, 2*), beispielsweise mittels Motor (9), eingestellt werden. Geeignete Abstandssensoren (43) sind dem Fachmann bekannt. Nicht-limitierende, geeignete Abstandssensoren (43) umfassen Time-of-Flight (TOF) Sensoren, Ultraschallsensoren und Radarsensoren.

In einer anderen bevorzugten Ausführungsform
- umfasst die Einheit zur drahtlosen Kommunikation (34) der Kommunikations- und Messeinheit einen an der Elektroplatine (31, 41) angeordneten Prozessor mit Software, sowie eine Antenne, wobei die Einheit (34) drahtlos Identifikations-, Steuerungs- und/oder Messdaten vom und zum Computer (6) und/oder von und zu weiteren Beleuchtungs- und Sensorkörpern (3*, 4*) von weiteren Fixierelementen (2*) sendet und empfängt. Das Senden und Empfangen der Daten umfasst eine drahtlose Kommunikationseinheit und erfolgt beispielsweise mittels Bluetooth, WiFi, WiFi-Mesh, LiFi, Mobilfunk WPAN und/oder WLAN. Die zum Computer (6) gesendeten Daten sind bevorzugt Daten, welche von der Einheit zur drahtgebundenen Kommunikation (35), der Positionserkennung (36) und/oder den Sensoren (43) erfasst wurden und an die Einheit zur drahtlosen Kommunikation (34) weitergeleitet wurden. Die vom Computer (6) an die Einheit zur drahtlosen Kommunikation (34) gesendeten Daten sind bevorzugt Daten zur Steuerung des Beleuchtungssystems (1), beispielsweise geänderte Beleuchtungsdaten, welche durch das im Computer hinterlegte Profil definiert werden. Diese Daten werden typischerweise dann von der Einheit zur drahtlosen Kommunikation (34) an die Einheit zur drahtgebunden Kommunikation (35) und/oder die Positionserkennung (36) weitergeleitet oder direkt beim Beleuchtungselement verarbeitet;
- umfasst die Einheit zur drahtgebundenen Kommunikation (35) der Kommunikations- und Messeinheit einen Mikrokontroller, insbesondere einen Mikrokontroller SOC, wobei der Mikrokontroller mit der Elektroplatine (31, 41) verbunden, insbesondere integriert, ist, wobei der Mikrokontroller konfiguriert ist, um mittels Power Line Communication (PLC) drahtgebunden mit den Einheiten zur drahtgebundenen Kommunikation (35) der weiteren der Beleuchtungs- und/oder Sensorkörper (3', 4), welche am gleichen Fixierelement (2) angeordnet sind, Identifikations-, Steuerungs- und/oder Messdaten mittels Einheit zur drahtgebundenen Kommunikation (35) und/oder Positionserkennung (36) auszutauschen. Dabei erfolgt die Kommunikation der Beleuchtungs- und/oder Sensorkörper (3, 3', 3*, 4, 4*) innerhalb eines Fixierelements (2, 2*) bevorzugt mittels Power Line Communication (PLC), wobei Identifikations-, Steuerungs- und/oder Messdaten ausgetauscht werden, beispielsweise der Positionserkennung (36). Geeignete Einheiten zur drahtgebundenen Kommunikation (35) sind dem Fachmann bekannt. Bevorzugte, nicht-limitierende Beispiele geeigneter Einheiten umfassen den Mikrokontroller ESP32, ESP8266, Raspberry Pi, Arduino und Prozessoren wie von Espressif, Altera, Atmel, Cypress, Intel, TI, Samsung, und/oder Maxim Integrated; und/oder
- ist die Positionserkennung (36) der Kommunikations- und Messeinheit am Beleuchtungs- und/oder am Sensorkörper (3, 3', 3*, 4, 4*), bevorzugt im Bereich des Befestigungselements (5), angeordnet, wobei die Positionserkennung (36) die Distanz zu benachbarten Beleuchtungs- und/oder Sensorkörper (3, 3', 3*, 4, 4*) misst, welche am gleichen Fixierelement (2, 2*) angeordnet sind, wobei die Positionserkennung (36) mit einem an der Elektroplatine (31, 41) angeordneten Mikroprozessor verbunden ist. Somit umfasst die Positionserkennung (36) bevorzugt mindestens zwei Sensoren zur Positionserkennung (36), welche je in eine Längsrichtung des Fixierelements (2, 2*), an welchem die Beleuchtungs- und/oder Sensorkörper (3, 3', 3*, 4, 4*) angebracht sind, die Distanz zum benachbarten Beleuchtungs- und/oder Sensorkörper (3, 3', 3*, 4, 4*) messen. Somit misst die Positionserkennung (36) in Längsrichtung des Fixierelements (2, 2*). Geeignete Sensoren zur Positionserkennung (36) sind dem Fachmann bekannt. Bevorzugte, nicht-limitierende Beispiele geeigneter Sensoren zur Positionserkennung (36) umfassen Time-of-Flight (TOF) Sensoren, Ultraschallsensoren und/oder Radarsensoren.

Dabei ist der Prozessor mit Software der Einheit zur drahtlosen Kommunikation (34) bevorzugt in den Mikrokontroller der Einheit zur drahtgebundenen Kommunikation (35) integriert, und der Mikroprozessor, mit welchem die Positionserkennung (36) verbunden ist, bevorzugt der Mikrokontroller der Einheit zur drahtgebundenen Kommunikation (35) ist.

In einer weiteren bevorzugten Ausführungsform des Beleuchtungssystems (1) erfolgt die Kommunikation zwischen der Kommunikations- und Messeinheit des Beleuchtungskörpers (3, 3?, 3*) und dem Computer (6) über die Einheit zur drahtlosen Kommunikation (34) des Beleuchtungskörpers (3, 3?, 3*), insbesondere mittels Bluetooth, WiFi, WiFi-Mesh, LiFi, Mobilfunk, WPAN und/oder WLAN, wobei bevorzugt
- bei mehreren Beleuchtungs- und/oder Sensorkörpern (3, 3', 3*, 4, 4*) an einem oder mehreren Fixierelementen (2, 2*) die Kommunikation über denjenigen Beleuchtungs- oder Sensorkörper (3, 3', 3*, 4, 4*) erfolgt, dessen Einheit zur drahtlosen Kommunikation (34) die beste Konnektivität zum Computer (6) aufweist, und
- gegebenenfalls die Einheit zur drahtlosen Kommunikation (34) des Beleuchtungs- oder Sensorkörpers (3, 3', 3*, 4, 4*) mit der besten Konnektivität zum Computer (6) als Relais zwischen dem Computer (6) und den anderen Beleuchtungs- oder Sensorkörpern (3, 3', 3*, 4, 4*) dient.

Dadurch kann das Beleuchtungssystem (1) ein WiFi-Mesh, auch WLAN-Mesh, Ad-hoc-Netzwerk oder WANET (Wireless ad hoc network) genannt, bilden.

In einer bevorzugten Ausführungsform stellt das Befestigungselement (5) ein Magnet oder Gummizug dar, und/oder ist das Befestigungselement (5) ein Klick-/Rastelement (51), wobei das Klick-/Rastelement (51) bevorzugt auf Metall wie Aluminium, Edelstahl oder Stahl, insbesondere Federstahl; auf Legierungen basierend auf Silber, Nickel, Zinn und/oder Gold; und/oder einem Kunststoff, insbesondere einem Thermoplasten oder Duroplasten, beruht. Geeignete, nicht-limitierende Kunststoffe umfassen PVC, PET, ABS, PC, PUR, Nylon, PE, PP, TPU und/oder Gemische basierend auf mindestens einem dieser Polymere.

Das Klick-/Rastelement (51) erlaubt die schnelle reversible - und typischerweise verschiebbare - Befestigung des Beleuchtungs- und/oder Sensorkörpers (3, 3', 3*, 4, 4*) am Fixierelement (2, 2*). Dabei erfolgt die Befestigung ganz besonders bevorzugt ohne Werkzeuge, sondern lediglich mittels Einklicken und/oder Einrasten des Klick-/Rastelements (51) in eine am resp. im Fixierelement (2, 2*) vorgegebene geometrische Form. Diese verläuft bevorzugt in Längsrichtung entlang des ganzen Fixierelements (2, 2*), was die einfache Verschiebbarkeit erlaubt.

Das Klick-/Rastelement (51) umfasst vorteilhafterweise ein Bodenteil, an welchem das Klick-/Rastelement (51) mit dem Fixierelement (2, 2*) verbunden werden kann. Weist das Klick-/Rastelement (51) ein Klickelement auf, ist dieses vorteilhafterweise in Form von am Bodenelement seitlich angeordneten Seiten, welche das Fixierelement (2, 2*) seitlich umgeben und welche seitlich oder oberhalb des Fixierelements (2, 2*) einklicken. Diese Seiten können auch als Rastelement ausgebildet sein, welche bei der Montage seitlich in eine entsprechende Profilierung des Fixierelements (2, 2*) einrasten. Alternativ kann das Rastelement auch in der Mitte des Bodenteils angeordnet sein und beispielsweise bei der Montage an das Fixierelement (2, 2*) in eine an dessen Unterseite angeordnete profilierte Rinne einrasten.

Der Bodenteil des Klick-/Rastelements (51), welcher typischerweise auf der Oberseite der Beleuchtungs- und Sensorkörper (3, 3', 3*, 4, 4*) und im Bereich der Stromabnehmer (32, 42) angebracht wird, weist vorteilhafterweise Öffnungen auf, durch welche die Stromabnehmer (32, 42) hindurchführen, um mit den Stromleitern (21) in Kontakt zu kommen. Die beiden seitlichen Fixierbereiche des Klick-/Rastelements (51), welche an zwei gegenüberliegenden Seiten des Bodenteils angebracht sind und welche in das Fixierelement (2, 2*) einrasten, schützen die Stromabnehmer (32, 42), solange die Beleuchtungs- und Sensorkörper (3, 3', 3*, 4, 4*) noch nicht am Fixierelement (2, 2*) reversibel befestigt ist.

Der Computer (6) des Beleuchtungssystems (1) ist bevorzugt ein Smartphone, Tablet, Laptop, Desktop-Computer, Cloud-Server, Server-Cluster, virtueller Server, Speicherprogrammierbare Steuerung (SPS). Der Computer (6) kann in Form von einem oder mehreren Geräten vorliegen. Zudem kann der Computer (6) im gleichen Raum wie das Beleuchtungssystem (1) sein. Oft ist es jedoch vorteilhaft, dass ein Computer (6) mit einer Vielzahl von verschiedenen Beleuchtungssystemen (1) verbunden ist. Dies erlaubt eine zentrale Steuerung und Kontrolle der einzelnen Beleuchtungssystemen (1). Der Computer (6) speichert zudem typischerweise die empfangenen Identifikations-, Steuerungs- und/oder Messdaten und wertet sie aus. Diese Daten können von der Einheit zur drahtlosen Kommunikation (34), der Einheit zur drahtgebundenen Kommunikation (35) und/oder der Positionserkennung (36) generiert worden sein. Zudem können auf dem Computer (6) ein oder mehrere Beleuchtungsprofile hinterlegt werden und die Beleuchtungselemente (33) entsprechend den Profilen gesteuert werden.

Der Computer (6) kommuniziert mit mindestens einem, bevorzugt nur mit einem, Beleuchtungs- und/oder Sensorkörper (3, 3', 3*, 4, 4*) des Beleuchtungssystems (1). Kommuniziert der Computer (6) nur mit einem Beleuchtungs- oder Sensorkörper (3, 3', 3*, 4, 4*), kommuniziert letzteres mit den anderen Beleuchtungs- und/oder Sensorkörper (3, 3', 3*, 4, 4*) des Beleuchtungssystems (1). Dadurch ist ein wesentlich geringerer Datenaustausch zwischen Beleuchtungs- und/oder Sensorkörper (3, 3', 3*, 4, 4*) und Computer (6) notwendig, was wiederum die drahtlose Verbindung stabiler macht, da keine Überlastung - auch bei grossen Datenmengen - droht. Dies wiederum ist für den erfolgreichen Betrieb des Beleuchtungssystems (1) äusserst hilfreich.

In einer anderen bevorzugten Ausführungsform umfasst das Netzteil (7) bevorzugt einen Wechselstrom-/Gleichstrom-Transformator, wobei der Gleichstrom, in den Stromleitern (21) geführt, im Kleinspannungsbereich bis 100 V ist und eine Leistung von zwischen 10 W und 3000 W aufweist, wobei das Netzteil (7) die Stromleiter (21) des Fixierelements (2, 2*) mit dem Stromnetz verbindet.

In einer weiteren bevorzugten Ausführungsform des Beleuchtungssystems (1) ist das Fixierelement (2, 2*) an mindestens einem Kabel oder Gestänge (8) aufgehängt, wobei die Länge des Kabels oder Gestänges (8) mittels mindestens einem Motor (9) verändert werden kann, sodass das Beleuchtungssystem (1) mit dem Fixierelement (2, 2*), sowie den Beleuchtungs- (3, 3', 3*) und gegebenenfalls Sensorkörper (4, 4*) in der Höhe verstellbar ist, wobei bevorzugt der vertikale Abstand des Beleuchtungskörpers (3, 3', 3*) oder Sensorkörpers (4, 4*) zu einem darunter angeordneten Körper und/oder nach oben zum Ankerpunkt des Fixierelements (2, 2*) mittels Sensor (43) bestimmt wird und der Abstand gegebenenfalls mittels Motor (9) auf eine vordefinierte Distanz eingestellt wird. Dabei wird die Höhe, d.h. der Abstand zu beispielsweise wachsenden Pflanzen, insbesondere automatisiert eingestellt. Alternativ ist das Fixierelement (2, 2*), und somit das Beleuchtungssystem (1), fest montiert, beispielsweise direkt an einer Diele oder an mindestens einer Wand.

Dabei ist das Beleuchtungssystem (1) bevorzugt an der Diele des Raums aufgehängt. Diese bilden für die jeweiligen Fixierelemente (2, 2*) einen Ankerpunkt. Geeignete Kabel oder Gestänge (8), beispielsweise Elektrokabel, Stahlkabel, Stangen, Schienen und/oder Ketten, sowie geeignete Motoren (9), welche bevorzugt an der Diele oder an den Enden der Fixierelemente (2, 2*) befestigt sind, sind dem Fachmann bekannt. Ein bevorzugter Motor (9) ist beispielsweise einen Schrittmotor.

### Das Verfahren

Mit dem erfindungsgemässen Verfahren kann das erfindungsgemässe intelligente und modulare Beleuchtungssystem (1) überraschend einfach erstellt werden.

In einer ganz besonders bevorzugten Ausführungsform i) des erfindungsgemässen Verfahrens wird das Befestigungselement (5) mit dem ersten Beleuchtungskörper (3) verbunden und der Beleuchtungskörper (3) mittels Befestigungselement (5) am Fixierelement (2) reversibel so angeordnet, dass die Stromabnehmer (32) des Beleuchtungskörpers (3) mit den Stromleitern (21) des Fixierelements (2) in Kontakt kommen, wobei das Befestigungssystem (5) ein Klick-/Rastsystem (51) darstellt. Dabei kann - aufgrund der Stromabnehmer (21) sowie des Klick-/Rastsystems (51) und den Stromabnehmer (32), der Beleuchtungskörper (3) nicht nur auf einfache Art und Weise reversibel am Fixierelement (2) befestigt und wieder entfernt werden, sondern bei Bedarf kann der Beleuchtungskörper (3) auch in Längsrichtung des Fixierelements (2) verschoben werden, auch nachdem der Beleuchtungskörper (3) am Fixierelement (2) befestigt wurde.

In einer anderen ganz besonders bevorzugten Ausführungsform ii) des erfindungsgemässen Verfahrens kommuniziert die Kommunikations- und Messeinheit des ersten Beleuchtungskörpers (3), wenn diese am Fixierelement (2) angeordnet ist, mit dem Computer (6) mittels Kommunikations- und Messeinheit und leitet die Position des Beleuchtungskörpers (3), relativ zu weiteren optional vorhandenen Beleuchtungs- und/oder Sensorkörpern (3', 4), am Fixierelement (2) an den Computer (6) weiter. Dabei umfasst die Kommunikation zwischen Kommunikations- und Messeinheit des Beleuchtungskörpers (3) mit dem Computer (6) das Senden und Empfangen von Identifikations-, Steuerungs- und/oder Messdaten, wobei die Daten von der Einheit zur drahtlosen Kommunikation (34), der Einheit zur drahtgebundenen Kommunikation (35) und/oder von der Positionserkennung (36) stammen können.

In einer weiteren ganz besonders bevorzugten Ausführungsform iii) werden die beiden Ausführungsformen i) und ii) miteinander kombiniert.

Die Einheit zur drahtgebundenen Kommunikation (35) und/oder die Positionserkennung (36) - sofern vorhanden - des ersten Beleuchtungskörpers (3) versuchen nach der Befestigung am Fixierelement (2) Kontakt mit weiteren Beleuchtungs- und/oder Sensorköpern (3', 4) aufzunehmen. Da zu Beginn des Erstellens des Beleuchtungssystems (1) noch keine weiteren Beleuchtungs- und/oder Sensorköpern (3', 4) vorhanden sind, erhalten die Einheit zur drahtgebundenen Kommunikation (35) und/oder die Positionserkennung (36) nach dem Aussenden erster Signale keine Rückmeldung. Somit weiss das Beleuchtungssystem (1), dass der befestigte Beleuchtungskörper (3) der erste am Fixierelement (2) angeordnete Beleuchtungskörper (3) ist.

In einer bevorzugten Ausführungsform des erfindungsgemässen Verfahrens
- wird mindestens ein weiterer Beleuchtungskörper (3') und/oder Sensorkörper (4) mittels Befestigungselement (5), bevorzugt mittels Klick-/Rastsystem (51), am Fixierelement (2) befestigt,
- kommuniziert die Kommunikations- und Messeinheit des weiteren Beleuchtungs- und/oder Sensorkörpers (3', 4), wenn am Fixierelement (2) angeordnet, mit der Kommunikations- und Messeinheit des Beleuchtungskörpers (3) und die Position des weiteren Beleuchtungs- und/oder Sensorkörpers (3', 4), relativ zum Beleuchtungskörper (3), und gegebenenfalls weiteren Beleuchtungs- und/oder Sensorkörpern (3', 4), am Fixierelement (2) erkennt und an den Computer (6) weiterleitet, und
- gegebenenfalls mindestens ein weiteres Fixierelement (2*) dem Beleuchtungssystem (1) hinzugefügt und mindestens ein weiterer Beleuchtungskörper (3*), und/oder mindestens ein weiterer Sensorkörper (4*), am weiteren Fixierelement (2*) angeordnet wird, wobei die Kommunikations- und Messeinheit der weiteren Beleuchtungs- und/oder Sensorkörper (3*, 4*) mit der Kommunikations- und Messeinheit des Beleuchtungskörpers (3) kommuniziert, wobei die Kommunikations- und Messeinheit des Beleuchtungskörpers (3) die erhaltenen Daten an den Computer (6) weiterleitet. Dadurch entsteht ein WiFi-Mesh.

In einer anderen bevorzugten Ausführungsform des erfindungsgemässen Verfahrens
- kommuniziert die Kommunikations- und Messeinheit des Beleuchtungskörpers (3) mit dem Computer (6) über die Einheit zur drahtlosen Kommunikation (34) des Beleuchtungskörpers (3), insbesondere mittels Bluetooth, WiFi, WiFi-Mesh, LiFi, Mobilfunk, WPAN und/oder WLAN wobei wenn mehrere Beleuchtungs- und/oder Sensorkörper (3, 3', 3*, 4, 4*) an einem oder mehreren Fixierelementen (2, 2*) angeordnet sind, bevorzugt diejenige Kommunikations- und Messeinheit, insbesondere die Einheit zur drahtlosen Kommunikation (34), mit dem Computer (6) kommuniziert, welche die beste Konnektivität zum Computer (6) aufweist, wobei gegebenenfalls die Einheit zur drahtlosen Kommunikation (34) des Beleuchtungs- oder Sensorkörpers (3, 3', 3*, 4, 4*) mit der besten Konnektivität zum Computer (6) als Relais zwischen dem Computer (6) und den anderen Beleuchtungs- oder Sensorkörpern (3, 3', 3*, 4, 4*) dient,
- erfolgt die Kommunikation zwischen den Kommunikations- und Messeinheiten der Beleuchtungs- und/oder Sensorkörper (3, 3', 4) des gleichen Fixierelements (2) mittels Einheit zur drahtgebundenen Kommunikation (35) und/oder Positionserkennung (36). Dabei umfasst die Kommunikation zwischen den Einheiten zur drahtgebundenen Kommunikation (35) bevorzugt Identifikations-, Steuerungs- und/oder Messdaten, wobei bevorzugt
   - die Einheit zur drahtgebundenen Kommunikation (35) des Beleuchtungskörpers (3) mit der Einheit zur drahtgebundenen Kommunikation (35) der Beleuchtungs- und/oder Sensorkörper (3', 4) des gleichen Fixierelements (2) mittels Power Line Communication (PLC) kommuniziert, wobei Identifikations-, Steuerungs- und/oder Messdaten ausgetauscht werden, und/oder
   - die Positionserkennung (36) des Beleuchtungskörpers (3) die Distanz zur Positionserkennung (36) der gegebenenfalls benachbarten Beleuchtungs- resp. Sensorkörpern (3', 4) des gleichen Fixierelements (2) misst, wobei der zuerst angebrachte Beleuchtungskörper (3) als erster Beleuchtungskörper (3) identifiziert wird, da die Positionserkennung (36) keine benachbarten Beleuchtungs- resp. Sensorkörper (3', 4) identifiziert. Wenn die Positionserkennung (36) eines Beleuchtungs- resp. Sensorkörpers (3', 4) nur einen benachbarten Beleuchtungs- resp. Sensorkörper (3', 4) erkennt, weiss das Beleuchtungssystem (1), dass der entsprechende Beleuchtungs- resp. Sensorkörpern (3', 4) an einem Ende des Fixierelements (2*) angeordnet ist.

In einer weiteren bevorzugten Ausführungsform des Verfahrens wird das Beleuchtungssystem (1) zum Beleuchten von sich in der Grösse ändernden Pflanzen, Tiere, Sachen und/oder Objekten eingesetzt, wobei die Beleuchtungs- und/oder Sensorkörper (3, 3', 3*, 4, 4*) einen Sensor (43) umfassen, welcher den Abstand des Sensors zu den Pflanzen, Tiere, Sachen und/oder Objekten misst, wobei der Abstand des Sensors (43) zu den Pflanzen, Tiere, Sachen und/oder Objekten automatisch mittels Motor (9) auf eine vorbestimmte Distanz eingestellt wird. Dadurch erhalten die sich darunter befindenden Pflanzen, Tiere, Sachen und/oder Objekte jederzeit die für sie optimalen Lichtemissionen.

### Die Verwendung

Das erfindungsgemässe Beleuchtungssystem (1) findet überraschenderweise äusserst vielfältige Anwendung zur Beleuchtung von Innen- und Aussenräumen, wobei die Räume bevorzugt Gewächshäuser, insbesondere Vertical Farms; Tierstallungen, öffentliche Gebäude, Messe- und/oder Konzerthallen, Zoos, Aquarien, Wohnzimmer, Gärten, Versuchslabore, Plantagen, Büro- und/oder Werkräume sind. Zudem kann das Beleuchtungssystem so ausgerichtet werden, dass Krankheiten resp. Mangelerscheinungen erkannt und diese bei Bedarf beispielsweise mittels UV-C Beleuchtung oder mittels Zugabe von Dünger behoben werden.

Es werden folgende Bezugszeichen verwendet:
- 1: Intelligentes modulares Beleuchtungssystem (1)
- 2: Fixierelement (2)
21 Stromleitern (21) des Fixierelements (2)
- 2*: mindestens ein weiteres Fixierelement (2*) des Beleuchtungs-systems (1)
- 3: Beleuchtungskörper (3)
31 Elektroplatine (31) des Beleuchtungskörpers (3)
32 Stromabnehmer (32) des Beleuchtungskörpers (3)
33 Beleuchtungselement (33)
34 Einheit zur drahtlosen Kommunikation (34)
35 Einheit zur drahtgebundenen Kommunikation (35)
36 Positionserkennung (36)
- 3': weitere Beleuchtungskörper (3'), welche am Fixierelement (2) angeordnet sind
- 3*: mindestens ein weiterer Beleuchtungskörper (3*), welcher am weiteren Fixierelement (2*) angeordnet ist
- 4: Sensorkörper (4)
41 Elektroplatine (41) des Sensorkörpers (4)
42 Stromabnehmer (42) des Sensorkörpers (4)
43 Sensor (43)
- 4*: mindestens ein weiterer Sensorkörper (4*), welcher am weiteren Fixierelement (2*) angeordnet ist
- 5: Befestigungselement (5)
51 Klick-/Rastelement (51)
- 6: Computer (6)
- 7: Netzteil (7)
- 8: Kabel oder Gestänge (8)
- 9: Motor (9)

Im Folgenden werden nicht-limitierende, bevorzugte Ausführungsformen des erfindungsgemässen Beleuchtungssystems (1) anhand der nachfolgenden Zeichnungen beschrieben. Diese sind nicht einschränkend auszulegen und werden als Bestandteil der Beschreibung verstanden:

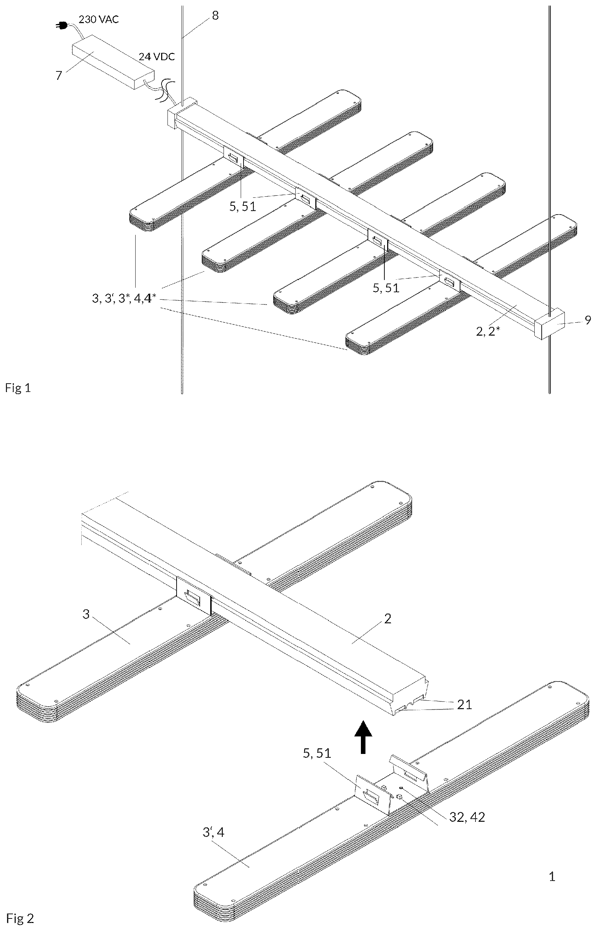

- Fig. 1: zeigt beispielhaft das Beleuchtungssystem (1) mit Fixierschiene (2, 2*) und einer Vielzahl von Beleuchtungs- und Sensorkörpern (3, 3', 3*, 4, 4*), welche mittels Befestigungselement (5) in Form eines Klick-/Rastelements (51) an der Fixierschiene (2, 2*) reversibel und verschiebbar fixiert sind. Das Fixierelement (2, 2*) ist über das Netzteil (7) an das Stromnetz angeschlossen und transformiert den Wechselstrom des Stromnetzes in Gleichstrom von beispielhaft 24 V um. Das Fixierelement (2, 2*) ist an beiden Seiten beispielhaft an einem Kabel (8) befestigt, wobei die Kabel (8), lediglich an der Diele fixiert und somit freihängend sind. Das Fixierelement (2, 2*) kann über zwei Schrittmotoren (9), welche an den beiden Enden des Fixierelements (2, 2*) angebracht sind, in vertikaler Richtung der Kabel (8) nach oben und unten bewegt werden. Dies kann selbständig, d.h. automatisiert, oder nach einem User Input erfolgen.
- Fig. 2: zeigt beispielhaft einen ersten Beleuchtungskörper (3), welcher am Fixierelement (2) mittels Klick-/Rastelement (51) reversibel und verschiebbar befestigt ist. Ein weiterer Beleuchtungskörper (3'), resp. ein Sensorkörper (4), an welchem das Klick-/Rastelement (51) befestigt ist, wird in das Fixierelement (2) eingeklickt, was mit dem Pfeil dargestellt ist. Das Bodenelement des Klick-/Rastelements (51), welches an den Beleuchtungs- und Sensorkörper (3, 3', 4) befestigt ist, weist u.a. Öffnungen auf, durch welche die Stromabnehmer (32, 42) des Beleuchtungs- oder Sensorkörpers (3', 4) ragen, damit sie beim Einklicken des Beleuchtungs- resp. Sensorkörpers (3, 3', 4) in das Fixierelement (2) mit den Stromleitern (21), welche beispielhaft an der Unterseite des Fixierelements (2) angeordnet sind, in Kontakt kommen. Das Bodenelement des Klick-/Rastelements (51) weist zudem weitere Öffnungen auf, durch welche beispielhaft zwei Positions-sensoren (36), welche je in eine Längsrichtung des Fixierelements (2) u.a. den Abstand zum benachbarten Beleuchtungs- resp. Sensorkörpers (3, 3', 4) messen können, wodurch dieser auch identifiziert werden kann. Dies erlaubt bei einer Vielzahl an Beleuchtungs- und Sensorkörpern (3, 3', 4) die automatische Bestimmung der genauen Reihenfolge der einzelnen Beleuchtungs- und Sensorkörpern (3, 3', 4). Auch erlaubt dies die automatische Änderung der Reihenfolge, falls ein Beleuchtungs- oder Sensorkörper (3, 3', 4) hinzugefügt oder entfernt wird.

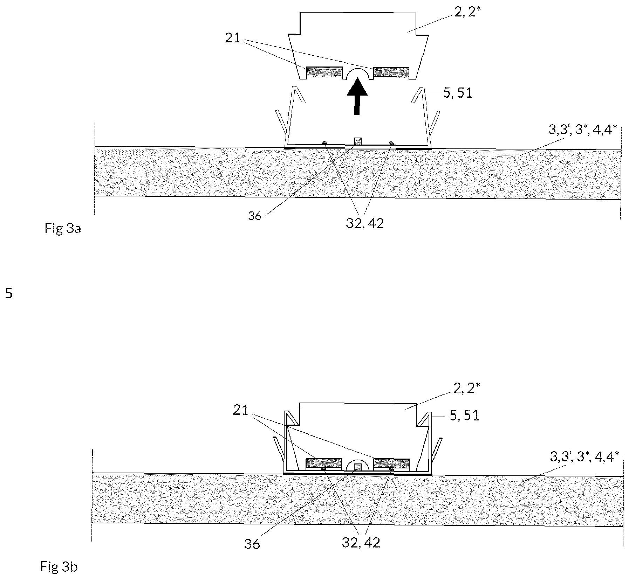

- Fig. 3a: zeigt beispielhaft die Seitenansicht eines Beleuchtungs- resp. Sensorkörpers (3, 3', 3*, 4, 4*), an welchem das Befestigungs-element (5) in Form eines Klick-/Rastelements (51) angebracht ist. Im Bereich des Bodenelements des Klick-/Rastelements (51) sind die Stromabnehmer (32, 42) dargestellt, welche durch die beiden Seiten des Klick-/Rastelements (51) geschützt sind, solange die Beleuchtungs- und Sensorkörper (3, 3', 3*, 4, 4*) noch nicht mit dem Fixierelement (2, 2*) verbunden sind. Zwischen den Stromabnehmern (32, 42) ist die Positionserkennung (36) angeordnet. Oberhalb des Klick-/Rastelements (51) ist der Querschnitt des Fixierelements (2, 2*) dargestellt, welches das Klick-/Rastelement (51) aufnimmt, was mit einem Pfeil dargestellt ist. Im unteren Bereich des Fixierelements (2, 2*) sind die beiden Stromleiter (21) mit Gleichspannung angeordnet - ein Stromleiter (21) mit einem Pluspol, der andere mit einem Minuspol versehen. Zwischen den Stromleitern (21) befindet sich beispielhaft eine halbrunde Ausnehmung, in welche die Positionserkennung (36) aufgenommen wird.
- Fig. 3b: zeigt den Beleuchtungs- resp. Sensorkörper (3, 3', 3*, 4, 4*) der Fig. 3a, welcher mittels Klick-/Rastelement (51) in das Fixierelement (2, 2*) reversibel eingerastet ist. Durch das Einrasten, d.h. Verbinden des Beleuchtungs- resp. Sensorkörper (3, 3', 3*, 4, 4*) mit dem Fixierelement (2, 2*), werden die Stromabnehmer (32, 42) beispielhaft mittels Federkraft an die Stromleiter gedrückt, wodurch der Gleichstrom problemlos zur Elektroplatine (31, 41) des Beleuchtungs- resp. Sensorkörper (3, 3', 3*, 4, 4*) fliessen kann. Und der Positionssensor (36) wird durch die Ausnehmung im Fixierelement (2, 2*) vor unerwünschten Einflüssen geschützt, kann jedoch mit den Positionssensoren (36) der benachbarten Beleuchtungs- resp. Sensorkörper (3, 3', 3*, 4, 4*) des gleichen Fixierelement (2, 2*), sofern vorhanden, kommunizieren.

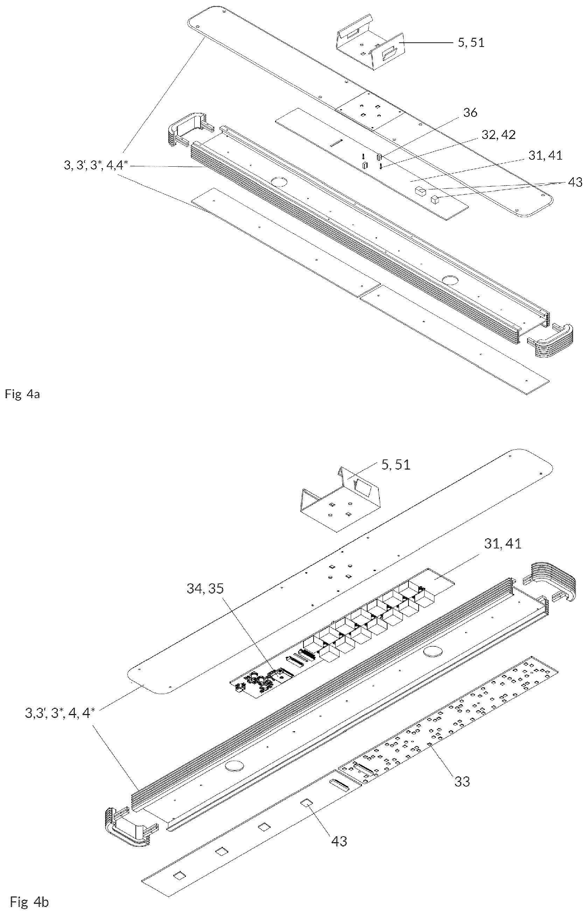

- Fig. 4a: zeigt eine Explosionsansicht eines beispielhaften Beleuchtungs- und Sensorkörpers (3, 3', 3*, 4, 4*). Der Mittelteil weist beispielhaft eine seitliche Profilierung auf, um die durch die Elektroplatine (31, 41) und der daran angeordneten Bauteile entstehende Wärme abzuführen. Dabei ist die Elektroplatine (31, 41) in den Mittelteil eingelagert und mit einem Oberteil abgedeckt, an welches das Befestigungselement (5), beispielsweise das Klick-/Rastelement (51) montiert wird. In der Mitte der Elektroplatine (31, 41) sind zwei Stromabnehmer (32, 42) angeordnet, welche durch die dafür vorgesehenen Öffnungen in der Bodenplatte des Klick-/Rastelements (51) geführt werden, um bei der Befestigung der Beleuchtungs- resp. Sensorkörper (3, 3', 3*, 4, 4*) am Fixierelement (2, 2*) mit den Stromleitern (21) in Kontakt zu kommen. Zudem sind in der Mitte der Elektroplatine (31, 41) beispielhaft die beiden Positions-sensoren der Positionserkennung (36) angeordnet. Auf der oberen Seite der Elektroplatine (31, 41) ist zudem beispielhaft ein Distanzsensor (43) zur Bestimmung der Distanz zur Diele des Raums, wodurch die Höhe des Beleuchtungssystems (1) über Boden bestimmt werden kann, sowie ein Lichtsensor (43) zur Bestimmung des gegenwärtigen Lichtspektrums und dessen Intensität, angeordnet.
- Fig. 4b: zeigt die Explosionsansicht des Beleuchtungs- und Sensorkörpers (3, 3', 3*, 4, 4*) von Fig. 4a, wobei die Unterseite der einzelnen Bauteile dargestellt ist. Die Unterseite der Elektroplatine (31, 41) sind die diversen Bauteile angeordnet, beispielsweise die Einheit zur drahtlosen Kommunikation (34) sowie die Einheit zur drahtgebundenen Kommunikation (35). An der Unterseite des Beleuchtungs- und Sensorkörpers (3, 3', 3*, 4, 4*) befinden sich die Beleuchtungsplatine mit einer Vielzahl an Beleuchtungskörpern (33) sowie beispielhaft die Sensorplatine mit diversen Sensoren (43), welche beispielhaft nach unten leuchten resp. nach unten messen. Somit weist der dargestellte Beleuchtungs- und Sensorkörper (3, 3', 3*, 4, 4*) beispielhaft sowohl Beleuchtungselemente (33) und Sensorelemente (33) auf. An der Elektroplatine (31, 41) sind diverse Komponenten wie die Einheit zur drahtlosen Kommunikation (34), die Einheit zur drahtgebundenen Kommunikation (35) sowie der Positionssensor (36) angeordnet.

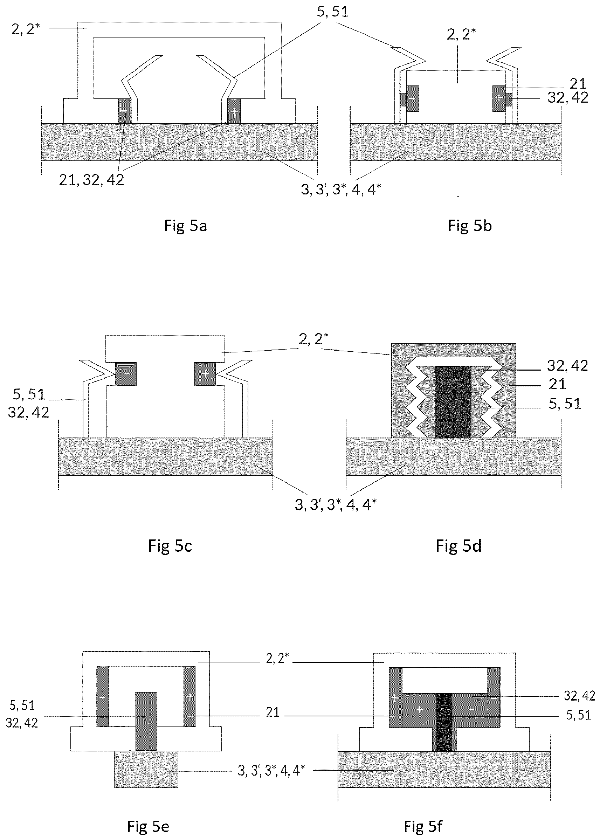

- Fig. 5: zeigt beispielhaft weitere Ausführungsformen des Befestigungs-elements (5) in Form eines Klick-/Rastelements (51), welches einen Beleuchtungs- resp. Sensorkörper (3, 3', 3*, 4, 4*) mit einem Fixier-element (2, 2*) verbindet. Der Beleuchtungs- resp. Sensorkörper (3, 3', 3*, 4, 4*) ist in der Seitenansicht und das Fixierelement (2, 2*) im Querschnitt dargestellt. Die einzelnen Fig. 5a bis Fig. 5f sind nachfolgend beschrieben.
- Fig. 5a: zeigt ein Fixierelement (2, 2*) in umgekehrter U-Form, wobei sich die beiden Stromleiter (21) an der Innenseite des Fixierelements (2, 2*) und direkt an der Oberfläche des Beleuchtungs- resp. Sensor-körpers (3, 3', 3*, 4, 4*) befinden. Die Stromleiter sind mit den Stromabnehmern (32, 42) in Kontakt - beispielsweise mittels Federkontakt. Die beiden Seiten des Klick-/Rastelements (51) greifen in die U-Form des Fixierelements (2, 2*) ein und befestigen so den Beleuchtungs- resp. Sensorkörper (3, 3', 3*, 4, 4*) am Fixierelement (2, 2*).
- Fig. 5b: zeigt ein Fixierelement (2, 2*) mit zwei Stromleitern (21), welche an den Seiten des Fixierelements (2, 2*) eingelassen sind. Entsprechend sind die Stromabnehmer (32, 42) an den beiden Seiten des Klick-/Rastelements (51) angeordnet. Letzteres greift zur Befestigung des Beleuchtungs- resp. Sensorkörper (3, 3', 3*, 4, 4*) über das Fixierelement (2, 2*).
- Fig. 5c: zeigt ähnlich Fig. 5b ein Fixierelement (2, 2*) mit seitlich eingelassenen Stromleitern (21). Da diese weiter eingelassen sind, werden sie durch die hervorstehenden Bereiche des Fixierelements (2, 2*) geschützt. Diese seitliche Vertiefung dient auch der Befestigung des Klick-/Rastelements (51), deren Seiten direkt auch als Stromabnehmer dienen.
- Fig. 5d: zeigt ein Fixierelement (2, 2*) mit einem Klick-/Rastelement (51) in Form eines Rastelements, welches von unten in das Fixierelement (2, 2*) eingreift. Beispielhaft sind die Stromleiter (21) an den inneren Seiten des Fixierelements (2, 2*), welche eine Rastung aufweisen, angebracht. Entsprechend sind auch die Stromabnehmer (32, 42) an den Seiten der Rastelements (51) angeordnet und durch einen Isolator (dunkelgrau dargestellt) getrennt.
- Fig. 5e und Fig. 5f: zeigen das gleiche Fixierelement (2, 2*) sowie einen Beleuchtungs- resp. Sensorkörper (3, 3', 3*, 4, 4*) mit einer weiteren Ausführungsform des Klick-/Rastelements (51), wobei das Klick-/Rastelement (51) in Form eines Drehverschlusses vorliegt, welcher in das Fixierelement (2, 2*) eingeklickt werden kann. Dabei ist das Klick-/Rastelement (51) in T-Form, welches durch die untere Öffnung des Fixierelements (2, 2*) eingefügt (Fig. 5e) und durch eine 90°-Drehung eingeklickt (Fig. 5f) wird. Das Fixierelements (2, 2*) umfasst inliegende und einander gegenüber angeordnete Stromleiter (21). Durch Drehung des Beleuchtungs- resp. Sensorkörpers (3, 3', 3*, 4, 4*) - und somit auch des in das Fixierelement (2, 2*) eingefügte Klick-/Rast-elements (51) kommen die an den beiden Enden des T-Form des Klick-/Rastelements (51) angeordneten Stromabnehmer (32, 42), welch durch einen Isolator voneinander getrennt sind, mit den Stromleitern (21) in Kontakt, wodurch der Strom zur Elektroplatine (31, 41; nicht dargestellt) des Beleuchtungs- resp. Sensorkörpers (3, 3', 3*, 4, 4*) fliessen kann (Fig. 5f).

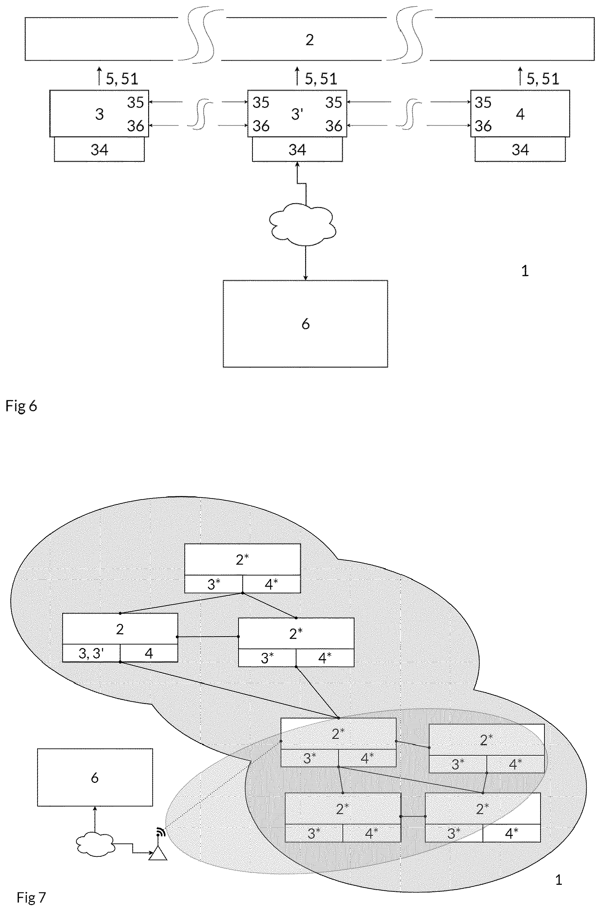

- Fig. 6: zeigt schematisch das erfindungsgemässe intelligente modulare Beleuchtungssystem (1) mit einem Fixierelement (2), an welchem mittels Befestigungselement (5, 51) der erste Beleuchtungskörper (3), ein weiterer Beleuchtungskörper (3') sowie ein Sensorelement (4) angeordnet ist. Die Beleuchtungs- und Sensorkörper (3, 3', 4) weisen alle eine Einheit zur drahtlosen Kommunikation (34), eine Einheit zur draht-gebundenen Kommunikation (35) sowie eine Positionserkennung (36) auf. Im dargestellten Beleuchtungssystem (1) weist die Einheit zur drahtlosen Kommunikation (34) des weiteren Beleuchtungskörpers (3') die beste Konnektivität mit dem Computer (6) auf, weshalb automatisch diese Einheit (34) für die Verbindung mit dem Computer (6) ausgewählt wurde. Die drahtlose Verbindung wird beispielhaft über das Internet abgewickelt, zum Beispiel mittels WiFi - oder falls der Computer (6) sich im gleichen Raum befindet und nicht zu weit von der Einheit (34) entfernt ist, mittels Bluetooth. Die Einheiten zur drahtgebundenen Kommunikation (35) der Beleuchtungs- und Sensorkörper (3, 3', 4) kommunizieren bevorzugt mittels Power Line Communication (PLC) und via Stromleiter (21) miteinander. Relevante Daten, wie beispielsweise an welcher Position die einzelnen Beleuchtungs- und Sensorkörper (3, 3', 4) angeordnet sind, werden über die Einheit zur drahtlosen Kommunikation (34) des weiteren Beleuchtungskörpers (3') an den Computer (6) geschickt. Die Positionserkennung (36), welche beispielsweise zwei Time-of-Flight (TOF) Sensoren beinhaltet, misst, ob ein Beleuchtungs- resp. Sensorkörper (3, 3', 4) benachbart ist. Falls dies der Fall ist, wird der benachbarte Beleuchtungs- resp. Sensorkörper (3, 3', 4) identifiziert, wodurch die Position des Beleuchtungs- resp. Sensorkörpers (3, 3', 4) relativ zu den benachbarten Beleuchtungsresp. Sensorkörpern (3, 3', 4) bestimmt werden kann. Die gemessene Information der Positionserkennung (36) von den Beleuchtungs- resp. Sensorkörpern (3, 4) wird über die Positionserkennung des Beleuchtungskörpers (3') an dessen Einheit zur drahtlosen Kommunikation (34) weitergeleitet und von dort an den Computer (6) geschickt. Die Positionserkennung (36) kann auch als zur Einheit zur drahtgebundenen Kommunikation (35) redundantes System dienen.
- Fig. 7: zeigt das erfindungsgemässe intelligente und modulare Beleuchtungssystem (1) beispielhaft in Form eines WiFi-Mesh Systems. Bei der Erstellung des Beleuchtungssystems (1) wurde zunächst das Fixierelement (2), in Fig. 7 oben links gezeigt, mit dem ersten Beleuchtungskörper (3), weiteren Beleuchtungskörpern (3') sowie Sensorkörpern (4) angeordnet. Anschliessend wurden neben dem Fixierelement (2) zwei weitere Fixierelemente (2*) mit Beleuchtungs- und Sensorkörpern (3*, 4*) montiert, wobei diese drei Fixierelemente (2, 2*) beispielhaft untereinander eine gute drahtlose Kommunikation mittels den Einheiten (34) aufweisen. Somit bilden sie einen ersten Verbund. Anschliessend wurde das Beleuchtungssystem (1) mit vier weiteren Fixierelementen (2*) mit Beleuchtungs- und Sensorkörpern (3*, 4*) erweitert, deren Einheiten der drahtlosen Kommunikation (34) miteinander in Kontakt sind. Diese bilden einen zweiten Verbund. Die Verbindung zum Computer (6) erfolgt über eine Einheit der drahtlosen Kommunikation (34) von einem Fixierelement (2*) des zweiten Verbundes, welche die beste Konnektivität zum Computer (6) aufweist. Diese Einheit (34) dient als Relais für die anderen Einheiten (34), welche z.T. wiederum als Relais für die restlichen Einheiten (34) dienen. Durch dieses WiFi-Mesh Netzwerk stehen alle Fixierelemente (2, 2*) mittels den Einheiten zur drahtlosen Kommunikation (34) sowohl miteinander als auch mit dem Computer (6) direkt oder indirekt in Kontakt, auch wenn einzelne Fixierelemente (2, 2*) über deren Einheiten zur drahtlosen Kommunikation (34) mit dem Computer keinen direkten Kontakt haben.

## Patentansprüche

1. Intelligentes modulares Beleuchtungssystem (1) umfassend
- ein Fixierelement (2) mit mindestens zwei Stromleitern (21),
- einen Beleuchtungskörper (3) umfassend eine Elektroplatine (31), mindestens zwei Stromabnehmer (32) und mindestens ein Beleuchtungselement (33),
- ein Befestigungselement (5) mit welchem der Beleuchtungskörper (3) mit dem Fixierelement (2) reversibel verbunden ist,
- einen Computer (6) mit einem Programm zur Erfassung sowie gegebenenfalls Anpassung und Steuern des Beleuchtungskörper mittels Daten, und
- ein Netzteil (7),
**dadurch gekennzeichnet, dass**
i) das Befestigungselement (5) ein Klick-/Rastelement (51) darstellt und am Beleuchtungskörper (3) im Bereich der Stromabnehmer (32) angeordnet ist, wodurch das Klick-/ Rastelement (51) den Beleuchtungskörper (3) reversibel mit dem Fixierelement (2) so verbindet, dass die Stromabnehmer (32) mit den Stromleitern (21) in Kontakt sind; und/oder
ii) der Beleuchtungskörper (3) eine Kommunikations- und Messeinheit umfassend eine Einheit zur drahtlosen Kommunikation (34) sowie gegebenenfalls eine Einheit zur drahtgebundenen Kommunikation (35) und/oder eine Positionserkennung (36) umfasst.

2. Beleuchtungssystem (1) nach Anspruch 1, **dadurch gekennzeichnet, dass** das Beleuchtungssystem (1)
- mindestens einen weiteren Beleuchtungskörper (3') und/oder mindestens einen Sensorkörper (4) mit Elektroplatine (41), mindestens zwei Stromabnehmern (42), mindestens einem Sensor (43) sowie eine Kommunikations- und Messeinheit umfasst, wobei der Beleuchtungskörper (3') und der Sensorkörper (4) mittels Befestigungselement (5) mit dem Fixierelement (2) reversibel verbunden sind, und/oder
- mindestens ein weiteres Fixierelement (2*) mit mindestens einem Beleuchtungskörper (3*), insbesondere eine Vielzahl an Beleuchtungskörpern (3*) und bevorzugt mindestens einem Sensorkörper (4*), aufweist.

3. Beleuchtungssystem (1) nach Anspruch 1 oder 2, **dadurch gekennzeichnet, dass**
- das Beleuchtungselement (33) eine Leuchtdiode, Halogenlampe, Quecksilberdampflampe, Natriumdampflampe, Leuchtstoffröhre, Energiesparlampe, Glühbirne, Neonröhre, Gasentladungslampe oder Laser Crystal Ceramics (LCC) darstellt und Licht mit einem Wellenspektrum von 260 nm (UVC-Strahlen) bis 980 nm (Fernes Infrarot, FIR), oder einen Teil davon, emittiert; und/oder
- die Sensoren (43) eine Kamera, insbesondere eine Kamera für sichtbares, ultraviolettes und/oder infrarotes Licht, eine Thermalkamera und/oder eine visuelle Kamera; Sensoren zur Bestimmung der Umgebungstemperatur, Blattoberflächentemperatur, Luftfeuchtigkeit, des CO₂-Gehalts, Lichteinfalls, Abstands zum beleuchtenden Objekt und/oder zur Decke; Sensoren zur Erkennung von Schädlingsbefall, Nährstoffmängel, Pflanzentyp und Wuchsqualität umfassen, wobei die Sensoren (43) am Sensorkörper (4) und/oder am Beleuchtungskörper (3) angeordnet sind,
wobei das Beleuchtungselement (33) und die Sensoren (43) direkt oder indirekt über eine Beleuchtungsplatine resp. Sensorplatine mit der Elektroplatine (31, 41) verbunden sind.

4. Beleuchtungssystem (1) nach mindestens einem der Ansprüche 1 bis 3, **dadurch gekennzeichnet, dass** die Elektroplatine (31) des Beleuchtungskörpers (3) und die Elektroplatine (41) des Sensorkörpers (4) auf einem Printed Circuit Board (PCB) basieren und bevorzugt die Einheit zur drahtlosen Kommunikation (34) mit Antenne, die Einheit zur drahtgebundenen Kommunikation (35), einen Mikrokontroller, insbesondere einen Mikrokontroller SOC, eine Ansteuereinheit für die Beleuchtungselemente (33), und/oder Sensoren zur Überwachung der Funktion des Boards, umfassen und/oder mit den Stromabnehmern (32, 42), der Positionserkennung (36), den Beleuchtungselementen (33) und/oder den Sensoren (43) verbunden ist.

5. Beleuchtungssystem (1) nach mindestens einem der Ansprüche 1 bis 4, **dadurch gekennzeichnet, dass**
- die Stromabnehmer (32, 42) durch das Klick-/Rastelement (51) seitlich geschützt sind, wenn das Klick-/Rastelement (51) am Beleuchtungs- und/oder Sensorkörper (3, 4) angeordnet ist und wenn der Beleuchtungs- und/oder Sensorkörper (3, 4) nicht am Fixierelement (2) befestigt ist, und/oder
- die Stromabnehmer (32, 42) des Beleuchtungs- und/oder Sensorkörpers (3, 4) in Form von elektrischen oder magnetischen Kontakten, oder Federkontakten vorliegen.

6. Beleuchtungssystem (1) nach mindestens einem der Ansprüche 1 bis 5, **dadurch gekennzeichnet, dass**
- die Einheit zur drahtlosen Kommunikation (34) der Kommunikations- und Messeinheit einen an der Elektroplatine (31, 41) angeordneten Prozessor mit Software, sowie eine Antenne umfasst, wobei die Einheit (34) drahtlos Identifikations-, Steuerungs- und/oder Messdaten vom und zum Computer (6) und/oder von und zu weiteren Beleuchtungs- und Sensorkörpern (3*, 4*) von weiteren Fixierelementen (2*) sendet und empfängt;
- die Einheit zur drahtgebundenen Kommunikation (35) der Kommunikations- und Messeinheit einen Mikrokontroller, insbesondere einen Mikrokontroller SOC, umfasst, wobei der Mikrokontroller mit der Elektroplatine (31, 41) verbunden, insbesondere integriert, ist, wobei der Mikrokontroller konfiguriert ist, um mittels Power Line Communication (PLC) drahtgebunden mit den Einheiten zur drahtgebundenen Kommunikation (35) der weiteren der Beleuchtungs- und/oder Sensorkörper (3', 4), welche am gleichen Fixierelement (2) angeordnet sind, Identifikations-, Steuerungs- und/oder Messdaten mittels Einheit zur drahtgebundenen Kommunikation (35) und/oder Positionserkennung (36) auszutauschen; und/oder
- die Positionserkennung (36) der Kommunikations- und Messeinheit am Beleuchtungsköper (3) und am Sensorkörper (4), bevorzugt im Bereich des Befestigungselements (5), angeordnet ist, wobei die Positionserkennung (36) die Distanz zu benachbarten Beleuchtungs- und/oder Sensorkörper (3, 4) misst, welche am gleichen Fixierelement (2) angeordnet sind, wobei die Positionserkennung (36) mit einem an der Elektroplatine (31, 41) angeordneten Mikroprozessor verbunden ist,
wobei der Prozessor mit Software der Einheit zur drahtlosen Kommunikation (34) bevorzugt in den Mikrokontroller der Einheit zur drahtgebundenen Kommunikation (35) integriert, und der Mikroprozessor, mit welchem die Positionserkennung (36) verbunden ist, bevorzugt der Mikrokontroller der Einheit zur drahtgebundenen Kommunikation (35) ist.

7. Beleuchtungssystem (1) nach mindestens einem der Ansprüche 1 bis 6, **dadurch gekennzeichnet, dass** die Kommunikation zwischen der Kommunikations- und Messeinheit des Beleuchtungskörpers (3) und dem Computer (6) über die Einheit zur drahtlosen Kommunikation (34) des Beleuchtungskörpers (3) erfolgt, insbesondere mittels Bluetooth, WiFi, WiFi-Mesh, LiFi, Mobilfunk, WPAN und/oder WLAN, wobei bevorzugt
- bei mehreren Beleuchtungskörpern (3, 3', 3*) und/oder Sensorkörpern (4, 4*) an einem oder mehreren Fixierelementen (2, 2*) die Kommunikation über denjenigen Beleuchtungs- oder Sensorkörper (3, 3', 3*, 4, 4*) erfolgt, dessen Einheit zur drahtlosen Kommunikation (34) die beste Konnektivität zum Computer (6) aufweist, und
- gegebenenfalls die Einheit zur drahtlosen Kommunikation (34) des Beleuchtungs- oder Sensorkörpers (3, 3', 3*, 4, 4*) mit der besten Konnektivität zum Computer (6) als Relais zwischen dem Computer (6) und den anderen Beleuchtungs- oder Sensorkörpern (3, 3', 3*, 4, 4*) dient.

8. Beleuchtungssystem (1) nach mindestens einem der Ansprüche 1 bis 7, **dadurch gekennzeichnet, dass** das Befestigungselement (5) ein Magnet oder Gummizug darstellt, und/oder ein Klick-/Rastelement (51) ist, wobei das Klick-/Rastelement (51) bevorzugt auf Metall wie Aluminium, Edelstahl oder Stahl, insbesondere Federstahl; auf Legierungen basierend auf Silber, Nickel, Zinn und/oder Gold; und/oder einem Kunststoff, insbesondere einem Thermoplasten oder Duroplasten, beruht.

9. Beleuchtungssystem (1) nach mindestens einem der Ansprüche 1 bis 8, **dadurch gekennzeichnet, dass** die Netzteil (7) einen Wechselstrom-/ Gleichstrom-Transformator umfasst, wobei der Gleichstrom im Kleinspannungsbereich bis 100 V ist und eine Leistung von zwischen 10 W und 3000 W aufweist, wobei das Netzteil (7) die Stromleiter (21) des Fixierelements (2, 2*) mit dem Stromnetz verbindet.

10. Beleuchtungssystem (1) nach mindestens einem der Ansprüche 1 bis 9, **dadurch gekennzeichnet, dass** das Fixierelement (2) an mindestens einem Kabel oder Gestänge (8) aufgehängt ist, wobei die Länge des Kabels oder Gestänges (8) mittels mindestens einem Motor (9) verändert werden kann, sodass das Beleuchtungssystem (1) mit dem Fixierelement (2), Beleuchtungskörper (3, 3', 3*) und gegebenenfalls Sensorkörper (4, 4*) in der Höhe verstellbar ist, wobei bevorzugt der vertikale Abstand des Beleuchtungskörpers (3, 3', 3*) oder Sensorkörpers (4, 4*) zu einem darunter angeordneten Körper und/oder nach oben zum Ankerpunkt des Fixierelements (2) mittels Sensor (43) bestimmt wird und der Abstand gegebenenfalls mittels Motor (9) auf eine vordefinierte Distanz eingestellt wird.

11. Verfahren zum Erstellen des intelligenten modularen Beleuchtungssystems (1) nach mindestens einem der Ansprüche 1 bis 10, **dadurch gekennzeichnet, dass**
i) das Befestigungselement (5) mit dem Beleuchtungskörper (3) verbunden wird und der Beleuchtungskörper (3) mittels Befestigungselement (5) am Fixierelement (2) reversibel so angeordnet wird, dass die Stromabnehmer (32) des Beleuchtungskörpers (3) mit den Stromleitern (21) des Fixierelements (2) in Kontakt kommen, wobei das Befestigungssystem (5) ein Klick-/Rastsystem (51) darstellt; und/oder
ii) die Kommunikations- und Messeinheit des Beleuchtungskörpers (3), wenn am Fixierelement (2) angeordnet, mit dem Computer (6) mittels Kommunikations- und Messeinheit kommuniziert und die Position des Beleuchtungskörpers (3), relativ zu weiteren optional vorhandenen Beleuchtungs- und/oder Sensorkörpern (3', 4), am Fixierelement (2) erkennt und an den Computer (6) weiterleitet.

12. Verfahren nach Anspruch 11, **dadurch gekennzeichnet, dass**
- mindestens ein weiterer Beleuchtungskörper (3') und/oder Sensorkörper (4) mittels Befestigungselement (5), bevorzugt mittels Klick-/Rastsystem (51), am Fixierelement (2) befestigt wird,
- die Kommunikations- und Messeinheit des weiteren Beleuchtungs- und/oder Sensorkörpers (3', 4), wenn am Fixierelement (2) angeordnet, mit der Kommunikations- und Messeinheit des Beleuchtungskörpers (3) kommuniziert und die Position des weiteren Beleuchtungs- und/oder Sensorkörpers (3', 4), relativ zum Beleuchtungskörper (3), und gegebenenfalls weiteren Beleuchtungs- und/oder Sensorkörpern (3', 4), am Fixierelement (2) erkennt und an den Computer (6) weiterleitet, und
- gegebenenfalls mindestens ein weiteres Fixierelement (2*) dem Beleuchtungssystem (1) hinzugefügt wird und mindestens ein weiterer Beleuchtungskörper (3*), und/oder mindestens ein weiterer Sensorkörper (4*), am weiteren Fixierelement (2*) angeordnet wird, wobei die Kommunikations- und Messeinheit der weiteren Beleuchtungs- und/oder Sensorkörper (3*, 4*) mit der Kommunikations- und Messeinheit des Beleuchtungskörpers (3) kommuniziert, wobei die Kommunikations- und Messeinheit des Beleuchtungskörpers (3) die erhaltenen Daten an den Computer (6) weiterleitet.

13. Verfahren nach Anspruch 11 oder 12, **dadurch gekennzeichnet, dass** das
- die Kommunikations- und Messeinheit des Beleuchtungskörpers (3) mit dem Computer (6) über die Einheit zur drahtlosen Kommunikation (34) des Beleuchtungskörpers (3) kommuniziert, insbesondere mittels Bluetooth, WiFi, WiFi-Mesh, LiFi, Mobilfunk, WPAN und/oder WLAN, wobei wenn mehrere Beleuchtungs- und/oder Sensorkörper (3, 3', 3*, 4, 4*) an einem oder mehreren Fixierelementen (2, 2*) angeordnet sind, bevorzugt diejenige Kommunikations- und Messeinheit mit dem Computer (6) kommuniziert, welche die beste Konnektivität zum Computer (6) aufweist, wobei gegebenenfalls die Einheit zur drahtlosen Kommunikation (34) des Beleuchtungs- oder Sensorkörpers (3, 3', 3*, 4, 4*) mit der besten Konnektivität zum Computer (6) als Relais zwischen dem Computer (6) und den anderen Beleuchtungs- oder Sensorkörpern (3, 3', 3*, 4, 4*) dient,
- die Kommunikation zwischen den Kommunikations- und Messeinheiten der Beleuchtungs- und/oder Sensorkörper (3, 3', 4) des gleichen Fixierelements (2) mittels Einheit zur drahtgebundenen Kommunikation (35) und/oder Positionserkennung (36) erfolgt, wobei bevorzugt
- die Einheit zur drahtgebundenen Kommunikation (35) des Beleuchtungskörpers (3) mit der Einheit zur drahtgebundenen Kommunikation (35) der Beleuchtungs- und/oder Sensorkörper (3', 4) des gleichen Fixierelements (2) mittels Power Line Communication (PLC) kommuniziert, wobei Identifikations-, Steuerungs- und/oder Messdaten ausgetauscht werden, und/oder
- die Positionserkennung (36) des Beleuchtungskörpers (3) die Distanz zur Positionserkennung (36) der gegebenenfalls benachbarten Beleuchtungs- resp. Sensorkörpern (3', 4) des gleichen Fixierelements (2) misst, wobei der zuerst angebrachte Beleuchtungskörper (3) als erster Beleuchtungskörper (3) identifiziert wird, da die Positionserkennung (36) keine benachbarten Beleuchtungs- resp. Sensorkörper (3', 4) identifiziert.

14. Verfahren nach mindestens einem der Ansprüche 11 bis 13, **dadurch gekennzeichnet, dass** das Beleuchtungssystem (1) zum Beleuchten von sich in der Grösse ändernden Pflanzen, Tiere, Sachen und/oder Objekten eingesetzt wird und die Beleuchtungs- und/oder Sensorkörper (3, 3', 3*, 4, 4*) einen Sensor (43) umfassen, welcher den Abstand des Sensors zu den Pflanzen, Tiere, Sachen und/oder Objekten misst, wobei der Abstand des Sensors (43) zu den Pflanzen, Tiere, Sachen und/oder Objekten automatisch mittels Motor (9) auf eine vorbestimmte Distanz eingestellt wird.

15. Verwendung des Beleuchtungssystems (1) nach mindestens einem der Ansprüche 1 bis 10 zur Beleuchtung von Innen- und Aussenräumen, wobei die Räume bevorzugt Gewächshäuser, insbesondere Vertical Farms; Tierstallungen, öffentliche Gebäude, Messe- und/oder Konzerthallen, Zoos, Aquarien, Wohnzimmer, Gärten, Versuchslabore, Plantagen, Büro- und/oder Werkräume sind.
